Europäisches Patentamt

European Patent Office

Office européen des brevets

(19)

(11) EP 0 468 537 B2

(12) NEW EUROPEAN PATENT SPECIFICATION

(45) Date of publication and mention
of the opposition decision:
**24.11.2004 Bulletin 2004/48**

(45) Mention of the grant of the patent:
**13.11.1996 Bulletin 1996/46**

(21) Application number: **91113752.9**

(22) Date of filing: **27.01.1988**

(51) Int Cl.[7]: **C08F 10/00**, C07F 17/00,
C08F 4/76

(54) **Catalysts, method of preparing these catalysts and method of using said catalysts**

Katalysatoren, Verfahren zur Herstellung derselben und Verfahren zu deren Anwendung

Catalyseurs, méthode de préparation de ces catalyseurs et procédé d'utilisation

(84) Designated Contracting States:
**AT BE DE ES FR GB IT LU NL SE**

(30) Priority: **30.01.1987 US 8800**
**22.12.1987 US 133480**

(43) Date of publication of application:
**29.01.1992 Bulletin 1992/05**

(60) Divisional application:
**93201185.1 / 0 561 479**
**93201186.9 / 0 558 158**

(62) Document number(s) of the earlier application(s) in
accordance with Art. 76 EPC:
**88300699.1 / 0 277 004**

(73) Proprietor: **ExxonMobil Chemical Patents Inc.**
**Florham Park, NJ 07932 (US)**

(72) Inventors:
• **Turner, Howard William**
**Webster, TX 77598 (US)**
• **Hlatky, Gregory George**
**Houston, TX 77062 (US)**

(74) Representative: **UEXKÜLL & STOLBERG**
**Patentanwälte**
**Beselerstrasse 4**
**22607 Hamburg (DE)**

(56) References cited:
**EP-A- 0 200 351** **US-A- 3 231 593**
**US-A- 4 522 932**

• **JOURNAL OF THE AMERICAN CHEMICAL
SOCIETY, vol. 108, 1986; R.F. JORDAN et al., pp.
1718-1719; and R.F. JORDAN, pp. 7410-7411**
• **JOURNAL OF THE CHEMICAL SOCIETY,
CHEMICAL COMMUNICATIONS, 1986; M.
BOCHMAN et al., pp. 1610-1611**
• **Bull. CHem. Soc. Jpn, 1986, 57, pp. 2600-2604**
• **Anal. Chim. Acta, 1970, pp. 481-485**
• **Anal. Chim. Acta, 1973, 73, pp. 409-412**
• **Advances in Fluorine Chemistry, Vol. 6, 1979,
Butterworth & Co. ltd., pp. 85-86, 152**
• **Reports on Research, Assisted by the Petroleum
Research Fund, August 1985, Am. Chem. Soc.,
pp. 316-317**
• **Proceedings of the Symposium on Lithium
Batteries, 1981, The Electrochemical Society
Inc., pp. 131-143**

Remarks:
•Divisional application 93201185.1 filed on
27/01/88.
•The file contains technical information submitted
after the application was filed and not included in this
specification

**Description**

FIELD OF THE INVENTION

This invention relates to catalysts and to methods of using these catalysts for producing polymeric products. More particularly, this invention relates to catalysts for polymerizing olefins, diolefins and/or acetylenically unsaturated monomers. Homopolymer and copolymer products may be produced with these catalysts. Divisional application Nr 93201185.1 relates to the use of specified anions in the preparation of the catalysts.

Background of the invention

It has been taught or suggested that the active catalyst species for olefin polymerisation is an ion pair and in particular an ion pair with a Group IVB metal component present as a cation or a decomposition product thereof and as a cocatalyst a Lewis acid either to form or stabilise the active ionic catalyst species (see Breslow and Newburg, Long and Breslow: J. Am. Chem. Soc. 1959 Vd 81 pp 81-86 and J. Am. Chem. Soc. 1960, Vd 82 pp 1953-1957; Dyachkovskii, Vysokomol, Soyed, 1965-Vd 7 pp 114-115 and Dyachkovski, Shilova and Shilov, J. Polym. Sci. Part C 1967, pp 2333-2339: 7219-7221).

The active catalyst is apparently formed through a Lewis acid - Lewis base reaction of two neutral components (the metallocene and the aluminum alkyl) leading to an equilibrium between a neutral apparently inactive adduct and an ion pair, presumably the active catalyst. As a result of this equilibrium, there is a competition for the anion which must be present to stabilise the active cation catalyst species. The equilibrium is reversible and such reversal would deactivate the catalyst.

The articles of Long and Breslow, and Breslow and Newburg use a soluble homogeneous catalyst of bis (cyctopentadienyl) titanium dichloride and diethyl aluminumchloride, but these systems are not highly active. Recently, (see EP 69951 and EP 129368 it has been found that active Ziegler-Natta type catalysts can be formed, using bis (cyclopentadienyl) compounds of Group IV B metals, including zirconium, hafnium and alumoxanes. Higher activities are obtained than with the Long, Breslow and Newburg catalysts and narrower molecular weight distributions than with conventional Ziegler-Natta systems.

The Lewis acids (e.g. diethyl aluminum chloride) contemplated in the soluble catalyst systems can act as chain transfer agents. The metal alkyl cocatalyst can be pyrophonic and hazardous to use. Catalysts using alumoxane remain subject to poisoning and require an undesirable excess of alumoxane.

It is hence amongst the objects of the invention to provide an improved catalyst system which is not subject to a chemical activation equilibrium and avoids the use of an undesirable cocatalyst. Better control of molecular weight and molecular weight distribution, easier production of higher molecular weight polymer and larger amounts of comonomer incorporated is also desirable.

The Journal of the Chemical Society, Chem. Comm. 1986 page 1610-11 described in an article by M. Bochmann and L. M. Wilson preparation of a compound $[Cp_2Ti(CH_3)(CH_3CN)][BPh_4]$ using $Cp_2Ti(CH_3)Cl$ and $BaBPh_4$ in $CH_3CN$, $[(Indenyl)_2Ti(CH_3)(RCN)][BPh_4]$ is also mentioned. It is stated that none of the complexes react with ethylene, butadiene or acetylene under mild conditions in the absence or presence of Lewis acids.

The Journal of the American Chemical Society, 1986, Vol. 108, page 1718-1719 described in an article by R. F. Jordan, W.E. Dasher and S.F. Echols monometallic systems incorporating unreactive, no co-ordinating anions involving the preparation of an ionic complex including $Cp_2ZrR+$ using $Ag[BPh_4][Cp_2Zr(CH_3)(CH_3CN)][BPh_4]$. $Ag°$ precipitates. $CH_3CN$ could be replaced by tetrahydrofuran (THF) to form a stable complex. It was suggested that these cationic complexes could be reactive with polyolefins.

In the Journal of the American Chemical Society, Vol. 108, 1986, pages 7410-7411 R.F. Jordan, C.S. Bajgur, R. Willett and B. Scott describe use of $[Cp_2Zr(CH_3)(THF)][BPh_4]$ in ethylene polymerisation in the absence of Al cocatalyst. The purpose is to demonstrate the existence of $Cp_2M(IV)R+$ cations; labile ligands, presumably THF instead of $CH_3CN$, are used. $CH_2Cl_2$ solvent is used at 25°C and 1 to 4 atmosphere of ethylene to produce polyethylene typically having an Mw of 18400 Mz of 33000, an Mw/Mn of 2.58 at relatively low activity of 0.2 g/mmol catalyst min. atm. The THF ligand whilst labile is said to compete with ethylene.

It is also amongst the objects of this invention to provide certain hafnium containing catalysts, which will yield relatively high molecular weight polymers and /or- polymers containing relatively large amounts of a plurality of comonomers, which comonomers are distributed in a manner at least approaching randomness. It is also amongst the objects of this invention to provide catalysts for producing polymeric products having relatively narrow molecular weight distributions and which are free of certain metal impurities.

According to the invention, there is provided an ionic catalyst for polymerising olefins, diolefins, and/or acetylenically unsaturated monomers, comprising an organometallic compound of the general formula:

$$[(A\text{-}Cp)\,MX_1]^+\,[BAr_1Ar_2X_3X_4]^-\ \text{or}\ [(A\text{-}Cp)\,MX_1L']^+\,[BAr_1Ar_2X_3X_4]^-$$

wherein M is titanium, zirconium or hafnium;

(A-cp) is either (Cp) (Cp*) or Cp-A'-Cp* and Cp and Cp* are the same or different substituted or unsubstituted cyclopentadienyl radicals;

A' is a covalent bridging group;

$X_1$ is selected from hydride radicals, hydrocarbyl radicals, subtituted-hydrocarbyl radicals or organometalloid radicals;

L' is a neutral Lewis base;

$[BAr_1Ar_2X_3X_4]$ being a compatible, bulky, non-coordinating anion comprising an aryl group and being a single coordination complex having a plurality of lipophilic radicals covalently coordinated to and shielding a central, formal charge bearing boron atom and sufficiently labile to be displaced by a neutral Lewis base, wherein:

B is boron in a valence state of 3;

$Ar_1$, $Ar_2$, $X_3$ and $X_4$ are selected from hydrocarbyl substituted aromatic hydrocarbon radicals containing up to 20 carbon atoms;

the anion being selected so as to avoid transfer of a fragment of the anion to the metal cation by steric hindrance resulting from substitutions on the aromatic carbons of the anion.

As the amount and size of the substitutions on the cyclopentadienyl radicals are reduced, more effective catalysts are obtained with second compounds containing anions which are more resistant to degradation, such as those with substituents on the ortho positions of the phenyl rings.

The catalyst may be used for a method of polymerizing an alphaolefin, diolefin and/or an acetylenically unsaturated monomer either alone or in combination in which said method comprises contacting monomer(s) and the catalyst prepared previously or in situ during polymerisation to form a polymer product. In such a method the monomer may be a prochiral olefin, the bis(cycopentadienyl) metal component or the catalyst (i) is a pure enantiomer or racemic mixture of two enantiomers of a rigid, chiral metallocene; or (ii) contains a covalent bridging group between two substituted cyclopentadienyl radicals; and the polymer product is an isotactic polymer.

The catalyst is prepared by combining at least two components. The first component is a bis(cyclopentadienyl) derivative of a Group IV B metal compound containing at least one ligand which will combine with the second component or at least a portion thereof such as a cation portion. The second of which components is an ion-exchange compound comprising a cation which will irreversibly react with at least one ligand contained in said Group IV-B metal compound (first component) and an anion which is a single coordination complex comprising a plurality of lipophilic radicals covalently coordinated to and shielding a central formally charge-bearing boron atom, which anion is relatively large or bulky, labile and stable to any reaction involving the cation of the second component. Upon combination of the first and second components, the cation of the second component reacts with one of the ligands of the first component, thereby generating an ion pair consisting of a Group IV-B metal cation with a formal coordination number of 3 and a valence of +4 and the aforementioned anion, which anion is compatible with and noncoordinating towards the metal cation formed from the first component. The anion of the second compound must be capable of stabilizing the Group IV-B metal cation complex without interfering with the Group IV-B metal cation's or its decomposition product's ability to function as a catalyst and must be sufficiently labile to permit displacement by an olefin, diolefin or an acetylenically unsaturated monomer during polymerization. For example, Bochmann and Wilson have reported (J. Chem. Soc., Chem. Comm., 1986, pp. 1610-1611) that bis (cyclopentadienyl)titanium dimethyl reacts with tetrafluoroboric acid to form bis(cyclopentadienyl)titanium methyl tetrafluoroborate. The anion is, however, insufficiently labile to be displaced by ethylene or other neutral bases such as ethers or nitriles. The second ion exchange component may be a salt comprising a cation capable of donating a proton which will irreversibly combine with said at least one ligand (substituent) liberated by said Group IV-B metal compound and the anion which is a single coordination complex comprising a charge-bearing boron core.

All references to the Periodic Table of the Elements herein shall refer to the Periodic Table of the Elements, published and copyrighted by CRC Press, Inc., 1984. Also, any reference to a Group or Groups shall be to the Group or Groups as reflected in this Periodic Table of the Elements.

As used herein, the recitation "compatible non-coordinating anion" means an anion which either does not coordinate to said cation or which is only weakly coordinated to said cation thereby remaining sufficiently labile to be displaced by a neutral Lewis base. The recitation "compatible noncoordinating anion" specifically refers to an anion which when functioning as a stabilizing anion in the catalyst of this invention does not transfer an anionic substituent or fragment thereof to said cation thereby forming a neutral four coordinate metallocene and a neutral metal or metalloid byproduct. Compatible anions are anions which are not degraded to neutrality when the initially formed complex decomposes. The recitation "metalloid", as used herein, includes non-metals such as boron and phosphorus which exhibit semi-metallic characteristics.

The Group IV-B metal compounds; i.e., titanium, zirconium and hafnium compounds, useful as first compounds in the preparation of the improved catalyst of this invention are bis(cyclopentadienyl) derivatives of titanium, zirconium and hafnium. In general, useful titanium, zirconium and hafnium compounds may be represented by the following general formulae:

$$1. \quad (A\text{-}Cp)MX_1X_2$$

$$2. \quad (A\text{-}Cp)MX'_1X'_2$$

$$3. \quad (A\text{-}Cp)ML$$

$$4. \quad (Cp^*)(CpR)MX_1$$

Wherein:

M is a metal selected from titanium, zirconium and hafnium (A-Cp) is either (Cp)(Cp*) or Cp-A'-Cp* and Cp and Cp* are the same or different substituted or unsubstituted cyclopentadienyl radicals wherein A' is a covalent bridging group which may contain a Group IV-A element;

M is a metal selected from the Group consisting of titanium, zirconium and hafnium;

L is an olefin, diolefin or aryne ligand;

$X_1$ and $X_2$ are, independently, selected from the group consisting of hydride radicals, hydrocarbyl radicals preferably having from 1 to 20 carbon atoms, substituted-hydrocarbyl radicals, wherein one or more of the hydrogen atoms are replaced with a halogen atom, preferably having from 1 to 20 carbon atoms, organometalloid radicals preferably comprising a Group IV-A element wherein each of the hydrocarbyl substitutions contained in the organic portion of said organometalloid, independently, contain from 1 to 20 carbon atoms;

$X'_1$ and $X'_2$ are joined and bound to the metal atom to form a metallacycle, in which the metal atom, $X'_1$ and $X'_2$ form a hydrocarbocyclic ring containing from 3 to 20 carbon atoms; and

R is a substituent, preferably a hydrocarbyl substituent, on one of the cyclopentadienyl radicals which is also bound to the metal atom.

Each carbon atom in the cyclopentadienyl radical may be, independently, unsubstituted or substituted with the same or a different radical selected from the group consisting of hydrocarbyl radicals, substituted-hydrocarbyl radicals wherein one or more hydrogen atoms is replaced by a halogen atom; hydrocarbyl-substituted metalloid radicals wherein the metalloid is selected from Group IV-A of the Periodic Table of the Elements, and halogen radicals. Suitable hydrocarbyl and substituted-hydrocarbyl radicals, which may be substituted for at least one hydrogen atom in the cyclopentadienyl radical, will contain from 1 to 20 carbon atoms and include straight and branched alkyl radicals, cyclic hydrocarbon radicals, alkyl-substituted cyclic hydrocarbon radicals, aromatic radicals and alkyl-substituted aromatic radicals. Similarly, and when $X_1$ and/or $X_2$ is a hydrocarbyl or substituted-hydrocarbyl radical, each may, independently, contain from 1 to 20 carbon atoms and be a straight or branched alkyl radical, a cyclic hydrocarbyl radical, an alkyl-substituted cyclohydrocarbyl radical, an aromatic radical or an alkyl-substituted aromatic radical. Suitable organometalloid radicals include mono-, di- and trisubstituted organometalloid radicals of Group IV-A elements wherein each of the hydrocarbyl groups contain from 1 to 20 carbon atoms. More particularly, suitable organometalloid radicals include trimethylsilyl, triethylsilyl, ethyldimethylsilyl, methyldiethylsilyl, triphenylgermyl, trimethylgermyl.

Illustrative, but not limiting examples of bis(cyclopentadienyl)zirconium compounds which may be used in the preparation of the improved catalyst of this invention are dihydrocarbyl-substituted bis(cyclopentadienyl)zirconium compounds such as bis(cyclopentadienyl)zirconium dimethyl, bis(cyclopentadienyl)zirconium diethyl, bis(cyclopentadienyl)zirconium dipropyl, bis(cyclopentadienyl)zirconium dibutyl, bis(cyclopentadienyl)zirconium diphenyl, bis(cyclopentadienyl)zirconium dineopentyl, bis(cyclopentadienyl)zirconium di(m-tolyl), and bis(cyclopentadienyl)zirconium di(p-tolyl) ; (monohydrocarbyl-substituted cyclopentadienyl)zirconium compounds such as (methylcyclopentadienyl) (cyclopentadienyl) and bis(methylcyclopentadienyl)zirconium dimethyl, (ethylcyclopentadienyl)(cyclopentadienyl) and bis(ethylcyclopentadienyl)zirconium dimethyl, (propylcyclopentadienyl)(cyclopentadienyl) and bis(propylcyclopentadienyl)zirconium dimethyl, [(n-butyl)cyclopentadienyl](cyclopentadienyl) and bis[(n-butylbisj(n-butyl)cyclopentadienyl] zirconium dimethyl, [(t-butyl)cyclopentadienyl](cyclopentadienyl) and bis[(t-butyl)cyclopentadienyl]zirconium dimethyl, (cyclohexylmethylcyclopentadienyl)(cyclopentadienyl) and bis(cyclohexylmethylcyclopentadienyl)zirconium dimethyl, (benzylcyclopentadienyl)(cyclopentadienyl) and bis(benzylcyclopentadienyl)zirconium dimethyl, (diphenylmethylcyclopentadienyl)(cyclopentadienyl) and bis(diphenylmethylcyclopentadienyl)zirconium dimethyl (methylcyclopentadienyl)(cyclopentadienyl) and bis(methylcyclopentadienyl)zirconium dihydride, (ethylcyclopentadienyl)(cyclopentadienyl) and bis(ethylcyclopentadienyl)zirconium dihydride, (propylcyclopentadienyl)(cyclopentadienyl) and bis(propylcyclopentadienyl)zirconium dihydride, [(n-butyl)cyclopentadienyl](cyclopentadienyl) and bis[(n-butyl)cyclopentadienyl] zirconium. dihydride, [(t-butyl)cyclopentadienyl](cyclopentadienyl) and bis[(t-butyl)cyclopentadienyl]zirconium dihydride, (cyclohexylmethylcyclopentadienyl)(cyclopentadienyl) and bis(cyclohexylmethylcyclopentadienyl)zirconium dihydride, (benzylcyclopentadienyl)(cyclopentadienyl) and bis(benzylcyclopentadienyl)zirconium dihydride, (diphenylmethyleyclopeniadienyl)(cyclopentadienyl) and bis(diphenylmethylcyclopentadienyl)zirconium dihydride ; (polyhydrocarbyl-substituted cyclopentadienyl)zirconium compounds such as (dimethylcyclopentadienyl)(cyclopentadienyl) and bis(dimethylcyclopentadienyl)zirconium dimethyl, (trimethylcyclopentadienyl)(cyclopentadienyl) and bis(trimethylcyclopentadienyl)zirconium dimethyl, (tetramethylcyclopentadienyl)(cyclopentadienyl) and bis(tetramethylcyclopentadienyl)zirconium dimethyl, (permethylcyclopentadienyl)(cyclopentadienyl) and bis(permethylcyclopentadienyl)zirconium dimethyl, (ethyltetramethylcyclopentadienyl)(cyclopentadienyl) and bis(ethyltetramethylcyclopentadienyl)zirconium dimethyl, (indenyl)(cyclopentadienyl) and bis(indenyl)zirconium dimethyl, (dimethylcyclopentadienyl)(cyclopentadienyl) and bis(dimethylcyclopentadienyl)zirconium dihydride, (trimethylcyclopentadienyl)(cyclopentadienyl) and bis(trimethylcyclopentadienyl)zirconium dihydride, (tetramethylcyclopentadienyl)(cyclopentadienyl) and bis(tetramethylcyclopentadienyl)zirconium dihydride, (permethylcyclopentadienyl)(cyclopentadienyl) and bis(permethylcyclopentadienyt)zirconium dihydride, (ethyltetramethylcyclopentadienyl)(cyclopentadienyl) and bis(ethyltetramethylcyclopentadienyl)zirconium dihydride, (indenyl)(cyclopentadienyl) and bis(indenyl)zirconium-dihydride; (metal hydrocarbyl-substituted cyclopentadienyl)zirconium compounds such as (trimethylsilylcyclopentadienyl)(cyclopentadienyl) and bis(trimethylsilylcyclopentadienyl)zirconium dimethyl, (trimethylgemylcyclopentadienyl)(cyclopentadienyl) and bis(trimethylgermylcyclopentadienyl)zirconium dimethyl, (trimethylstannylcyclopentadienyl)(cyclopentadienyl) and bis(trimethyl stannylcyclopentadienyl)zirconium dimethyl, (trimethylplumbyl cyclopentadienyl)(cyclopentadienyl) and bis(trimethylplumbylcyclopentadienyl)zirconium dimethyl, (trimethylsilylcyclopentadienyl)(cyclopentadienyl) and bis (trimethylsilylcyclopentadienyl) zirconium dihydride, (trimethylgermylcyclopentadienyl)(cyclopentadienyl) and bis(trimethylgermylcyclopentadienyl)zirconium dihydride, (trimethylstannylcyclopentadienyl)(cyclopentadienyl) and bis(trimethylstannylcyclopentadienyl)zirconium dihydride, (trimethylplumbylcyclopentadienyl)(cyclopentadienyl) and bis(trimethylplumbylcyclopentadienyl)zirconium dihydride ; (halogen-substituted cyclopentadienyl)zirconium compounds such as (trifluoromethylcyclopentadienyl)(cyclopentadienyl) and bis(trifluoromethylcyclopentadienyl)zirconium dimethyl, (trifluoromethylcyclopentadienyl)(cyclopentadienyl) and bis(trifluoromethylcyclopentadienyl)zirconium dihydride ; silyl-substituted (cyclopentadienyl)zirconium compounds such as bis(cyclopentadienyl)zirconium di(trimethylsilyl) and bis(cyclopentadienyl)zirconium di(phenyldimethylsilyl) ; (bridged-cyclopentadienyl)zirconium compounds such as methylene bis(cyclopentadienyl)zirconium dimethyl, ethylene bis(cyclopentadienyl)zirconium dimethyl, dimethylsilyl bis(cyclopentadienyl)zirconium dimethyl, methylene bis(cyclopentadienyl)zirconium dihydride and dimethylsilyl bis(cyclopentadienyl)zirconium dihydride ; bis(cyclopentadienyl)zirconacycles such as bis(pentamethylcyclopentadienyl)zirconacyclobutane, bis(pentamethylcyclopentadienyl)zirconacyclopentane and bis(cyclopentadienyl)zirconaindane; olefin, diolefin and aryne ligand substituted bis(cyclopentadienyl)zirconium compounds such as bis(cyclopentadienyl)(1,3-butadiene)zirconium, bis(cyclopentadienyl)(2,3-dimethyl1,3-butadiene)zirconium and bis(pentamethylcyclopentadienyl)(benzyne)zirconium ; (hydrocarbyl)(hydride)substituted bis(cyclopentadienyl)zirconium compounds such as bis(pentamethylcyclopentadienyl)zirconium (phenyl)(hydride) and bis(pentamethylcyclopentadienyl)zirconium (methyl)(hydride) ; and bis(cyclopentadienyl)zirconium compounds in which a substituent on the cyclopentadienyi radical is bound to the metal such as (pentamethylcyclopentadienyl)(tetramethylcyclopentadionylmethylene)zirconium hydride, and (pentamethylcyclopentadienyl)(tetramethylcyclopentadienylmethylene)zirconium phenyl.

A similar list of illustrative bis(cyclopentadienyl)hafnium and bis(cyctopentadienyl)titanium compounds could be made, but since the lists would be nearly identical to that already presented with respect to bis(cyclopentadienyl) zirconium compounds, such lists are not deemed essential to a complete disclosure. Those skilled in the art, however, are aware that bis(cyclopentadienyl)hafnium compounds and bis(cyclopentadienyl)titanium compounds corresponding to certain of the bis(cyclopentadienyl)zirconium compounds listed supra are not known. The lists would, therefore, be reduced by these compounds. Other bis(cyclopentadienyl)hafnium compounds and other bis(cyclopentadienyl)titanium compounds as well as other bis(cyclopentadienyl)zirconium compounds which are useful in the catalyst compositions of this invention will, of course, be apparent to those skilled in the art.

Compounds useful as a second component in the preparation of the catalyst of this invention will comprise a cation, which may be a Bronsted acid capable of donating a proton, and the compatible noncoordinating anion. Second compounds comprising boron which are particularly useful in the preparation of catalysts of this invention may be represented by the following general formula:

$$[L'-H]^+[BAr_1 Ar_2X_3X_4]^-$$

Wherein:

L' is a neutral Lewis base:
H is a hydrogen atom:
$[L'-H]^+$ is a Bronsted acid:
B is boron in a valence state of 3:
$Ar_1$, $Ar_2$, $X_3$ and $X_4$ are selected from hydrocarbyl substituted aromatic hydrocarbon radicals containing up to 20 carbon atoms.

Illustrative, but not limiting, examples of boron compounds which may be used as a second component in the preparation of the improved catalysts of this invention are trialkyl-substituted ammonium salts such as trimelhylammonium tetra(p-tolyl)boron, trimethylammonium tetra(o-tolyl)boron, tripropylammonium tetra(o,p-dimethylphenyl)boron, tributylammonium tetra(m,m-dimethylphenyl)boron, and tri(n-butyl)anmonium tetra(o-tolyl)boron and the like: N,N-dialkyl anilinium salts and dialkyl ammonium salts and triaryl phosphonium salts.

It should be noted that the foregoing list is not intended to be exhaustive and other boron compounds that would be useful would be readily apparent, from the foregoing general equations, to those skilled in the art.

In general, and while most first components identified above may be combined with most second components identified above to produce an active olefin polymerization catalyst, it is important to continued polymerization operations that either the metal cation initially formed from the first component or a decomposition product thereof be a relatively stable catalyst. It is also important that the anion of the second compound be stable to hydrolysis when an ammonium salt is used. Further, it is important that the acidity of the second component be sufficient, relative to the first, to facilitate the needed proton transfer. Conversely, the basicity of the metal complex must also be sufficient to facilitate the needed proton transfer. Certain metallocene compounds - using bis(pentamethylcyclopentadienyl)hafnium dimethyl as an illustrative, but not limiting example - are resistant to reaction with all but the strongest Bronsted acids and thus are not suitable as first components to form the catalysts of this invention. In general, bis(cyclopentadienyl) metal compounds which can be hydrolyzed by aqueous solutions can be considered suitable as first components to form the catalysts described herein.

With respect to the combination of first (metal-containing) component to second component to form a catalyst of this invention, it should be noted that the two compounds combined for preparation of the active catalyst must be selected so as to avoid transfer of a fragment of the anion, particularly an aryl group, to the metal cation, thereby forming a catalytically inactive species. This could be done by steric hindrance, resulting from substitutions on the cyclopentadienyl carbon atoms as well as substitutions on the aromatic carbon atoms of the anion. It follows, then, that metal compounds (first components) comprising perhydrocarbyl-substituted cyclopentadienyl radicals could be effectively used with a broader range of second compounds than could metal compounds (first components) comprising unsubstituted cyclopentadienyl radicals. As the amount and size of the substitutions on the cyclopentadienyl radicals are reduced, however, more effective catalysts are obtained with second compounds containing anions which are more resistant to degradation, such as those with substituents on the ortho positions of the phenyl rings.

In general, the catalyst can be prepared by combining the two components in a suitable solvent at a temperature within the range from -100°C to 300°C. The catalyst may be used to polymerize α-olefins and/or acetylenically unsaturated monomers having from 2 to 18 carbon atoms and/or diolefins having from 4 to 18 carbon atoms either alone or in combination. The catalyst may also be used to polymerize α-olefins, diolefins and/or acetylenically unsaturated monomers in combination with other unsaturated monomers. In general, the polymerization may be accomplished at conditions well known in the prior art. It will, of course, be appreciated that the catalyst system will form in situ if the components thereof are added directly to the polymerization process and a suitable solvent or diluent, including condensed monomer, is used in said polymerization process. It is, however, preferred to form the catalyst in a separate step in a suitable solvent prior to adding the same to the polymerization step. While the catalysts do not contain pyrophoric species, the catalysts' components are sensitive to both moisture and oxygen and should be handled and transferred in an inert atmosphere such as nitrogen, argon or helium.

As indicated supra, the improved catalyst of the present invention will, preferably, be prepared in a suitable solvent or diluent. Suitable solvents or diluents include any of the solvents known in the prior art to be useful as solvents in the polymerization of olefins, diolefins and acetylenically unsaturated monomers. Suitable solvents, then, include, but are not necessarily limited to, straight and branched-chain hydrocarbons such as isobutane, butane, pentane, hexane, heptane and octane ; cyclic and alicyclic hydrocarbons such as cyclohexane, cycloheptane, methylcyclohexane and methylcycloheptane and aromatic and alkyl-substituted aromatic compounds such as benzene, toluene and xylene. Suitable solvents also include liquid olefins which may act as monomers or comonomers including ethylene, propylene, butadiene, cyclopentene, 1-hexene, 3-methyl-1-pentene, 4-methyl-1-pentene, 1,4-hexadiene, 1-octene and 1-decene. Suitable solvents further include basic solvents not generally useful as polymerization solvents when conventional Ziegler-Natta type polymerization catalysts are used such as chlorobenzene.

While the inventors do not wish to be bound by any particular theory, it is believed that when the two compounds used to prepare the improved catalysts of the present invention are combined in a suitable solvent or diluent, all or a part of the cation of the second compound (the acidic proton) combines with one of the substituents on the metal containing (first component). In the case where the first component has a formula corresponding to that of general formula 1 supra, a neutral compound is liberated, which neutral compound either remains in solution or is liberated as a gas. In this regard, it should be noted that if either $X_1$ or $X_2$ in the metal containing (first component) is a hydride, hydrogen gas may be liberated. Similarly, if either $X_1$ or $X_2$ is a methyl radical, methane may be liberated as a gas. In the cases where the first component has a formula corresponding to those of general formulae 2, 3 or 4, one of the substituents on the metal-containing (first) component is protonated but, in general, no substituent is liberated from the metal. It is preferred that the molar ratio of first component to second component be 1:1 or greater. The conjugate base of the cation of the second compound, if one remains, will be a neutral compound which will remain in solution or complex with the metal cation formed, though, in general, a second compound is chosen such that any binding of the neutral conjugate base to the metal cation will be weak or non-existant. Thus, as the steric bulk of this conjugate base increases, it will, simply, remain in solution without interfering with the active catalyst. Similarly, if the cation of the second compound is a trialkyl ammonium ion, this ion will liberate a hydrogen atom to form gaseous hydrogen or methane and the conjugate base of the cation will be a tertiary amine. In like fashion, if the cation were a hydrocarbyl-substituted phosphonium ion containing at least one reactive proton, as is essential to the present invention, the conjugate base of the cation would be a phosphine.

While still not wishing to be bound by any particular theory, it is also believed that as one of the metal containing (first component) substituents (a ligand) is liberated, the noncoordinating anion originally contained in the second compound used in the catalyst preparation combines with and stabilizes the metal cation formed from the first component, formally having a coordination number of 3 and a +4 valence. The metal cation and noncoordinating anion will remain so combined until the catalyst is contacted with one or more olefins, diolefins and/or acetylenically unsaturated monomers either alone or in combination with one or more other monomers or another neutral Lewis base. As indicated supra, the anion contained in the second compound must be sufficiently labile to permit rapid displacement by an olefin, diolefin or an acetylenically unsaturated monomer to facilitate polymerization.

The chemical reactions which occur in forming the catalysts of this invention may be represented by reference to the general formulae set forth herein as follows:

1. $(A\text{-}Cp)MX_1X_2 + [L'\text{-}H]^+[BAr_1\,Ar_2X_3X_4]' \rightarrow$

$[(A\text{-}Cp)MX_1]^+[BAr_1Ar_2X_3X_{4J} + HX_2 + L'$ or

$[(A\text{-}Cp)MX_2]^+[BAr_1,\,Ar_2X_3X_4]^- + HX_1 + L'$

2. $(A\text{-}Cp)M\overline{X'_1X'}_2 + [L'\text{-}H]^+[BAr_1Ar_2X_3X_4]^- \text{-->}$

$[(A\text{-}Cp)M(\overline{X'_1X'}_2H)]^+[BAr_1Ar_2X_3X_4]^- + L'$ or

$[(A\text{-}Cp)M(\overline{X'_2X'}_1H)]^+[BAr_1Ar_2X_3X_4]^- + L'$

3. $(A\text{-}Cp)ML + [L'\text{-}H]^+[BAr_1Ar_2X_3X_4]^- \rightarrow$

$[(A\text{-}Cp)M(LH)]^+[BAr_1Ar_2X_3X_4]^- + L'$

$$4. \ (Cp)(R\text{-}Cp^*)MX_1 \ + \ [L'\text{-}H]^+[BAr_1Ar_2X_3X_4]^- \ \text{-->}$$

$$[Cp(HR\text{-}Cp^*)MX_1]^+[BAr_1Ar_2X_3X_4]^- \ + \ L' \ or$$

$$[Cp(R\text{-}Cp^*)M]^+[BAr_1Ar_2X_3X_4]^- \ + \ HX_1 \ + \ L'$$

In the foregoing reaction equations, the numbers correspond to the numbers set forth in combination with the general equations for useful metallocene compounds of Group IV-B metals (first components). In general the stability and rate of formation of the products in the foregoing reaction equations, particularly the metal cation, will vary depending upon the choice of the solvent, the acidity of the $[L'\text{-}H]^+$ selected, the particular L', the anion, the temperature at which the reaction is completed and the particular dicyclopentadienyl derivative of the metal selected. Generally, the initially formed ion-pair will be an active polymerization catalyst.

Active catalyst species which have not been characterized, include active decomposition products, are of the same type as those which have been isolated and fully characterized or at least retain the essential ion pair structure required for functioning as a catalyst. More particularly, it is believed that the active catalyst species which have not been isolated, including active decomposition products, are the same type as the isolated and characterized active catalyst species in that the these species contain a bis(cyclopentadienyl)metal center which center remains cationic, unsaturated and has a metal-carbon bond which is reactive with olefins, diolefins and acetylenically unsaturated compounds.

In general, the stable catalyst formed by the method of this invention may be separated from the solvent and stored for subsequent use. The less stable catalyst, however, will, generally, be retained in solution until ultimately used in the polymerization of olefins, diolefins and/or acetylenically unsaturated monomers. Alternatively, any of the catalysts prepared by the method of this invention may be retained in solution for subsequent use or used directly after preparation as a polymerization catalyst. Moreover, and as indicated supra, the catalyst may be prepared in situ during a polymerization reaction by passing the separate components into the polymerization vessel where the components will contact and react to produce the improved catalyst of this invention.

When the ratio of first compound to second compound is 1:1, at concentrations below $10^{-5}$M, the catalyst is often not active for olefin polymerization. While the inventors do not wish to be bound by any particular theory, it is believed that adventitious oxygen or moisture in the diluent or monomers may deactivate the catalyst. When the ratio of the first compound to the second compound is 2:1 to 10:1 or more, however, concentrations of the second component can be as low as about $10^{-6}$M.

When first compounds containing hafnium are reacted with second compounds containing a metal or boron and a less acidic ammonium cations - using tri(n-butyl)ammonium tetrakis(pentafluorophenyl)boron as an example - and the catalyst therefrom is used in the polymerization process of this invention, induction periods of 1 to 15 minutes or more can be observed before the uptake of monomer begins. This phenomenon is most pronounced when the concentration of the hafnium compound is below $10^{-4}$M and that of the second component is below $10^{-5}$M; higher concentrations of catalyst solution often show no induction period. It can also be observed when first compounds containing zirconium are used when the concentration of the second component is $10^{-6}$ M or less. While the inventors do not wish to be bound by any particular theory, it is believed that the catalyst species formed decomposes in the polymerization process to form a catalytically inactive metal-containing compound and regenerating either the same or a different second component. This new second component activates any excess first component present to regenerate the active catalyst species of the present invention. While still not wishing to be bound by any particular theory, it is believed that increasing the concentration of the catalyst or using second components containing more acidic ammonium cations will either diminish the length of this induction period or eliminate it completely.

In the polymerization process of this invention, the molecular weight appears to be a function of both catalyst concentration and polymerization temperature and polymerization pressure. The polymers produced with the catalyst of this invention, when prepared in the absence of significant mass transport effects, will, generally, have relatively narrow molecular weight distributions.

Certain of the catalysts of this invention, particularly those based on hafnocenes, when used as described herein for the polymerization and copolymerization of $\alpha$-olefins, diolefins, and/or acetylenically unsaturated monomers, in the absence of a chain transfer agent, can lead to the production of extremely high molecular weight polymers and copolymers having relatively narrow molecular weight distributions. In this regard, it should be noted that homopolymers and copolymers having molecular weights up to $2 \times 10^6$ and molecular weight distributions within the range of 1.5 to 15 can be produced with the catalysts of this invention. The substituents on the cyclopentadienyl radicals, however, can exert a profound influence on polymer molecular weights.

Catalysts of this invention containing a first component which is either a pure enantiomer or the racemic mixture of two enantiomers of a rigid, chiral metallocene can polymerize prochiral olefins (propylene and higher a-olefins) to isotactic polymers. Bis(cyclopentadienyl)metal compounds in which each of the cyclopentadienyl radicals is substituted and containing a covalent bridging group between the two cyclopentadienyl radicals are particularly useful for isotactic polymerizations of this type.

A particularly surprising feature of some of the catalysts of this invention, particularly those based on hafnocenes in combination with a second component comprising bcron, is that when the catalysts of this invention are used to copolymerize α-olefins, either alone or in combination with diolefins, the amount of higher molecular weight olefin or diolefin incorporated into the copolymer is significantly increased when compared to copolymers prepared with the more conventional Ziegler-Natta type catalysts and bis(cyclopentadienyl)zirconium catalysts. The relative rates of reaction of ethylene and higher α-olefins with the aforementioned hafnium-based catalysts of this invention are much closer than with conventional Ziegler-Natta catalysts of the Group IV-B metals. The monomer distribution in copolymers prepared with the catalysts of this invention, particularly with the lower α-olefins and lower diolefins, will range from near perfectly alternating to statistically random.

In general, catalysts can be selected so as to produce the polymer products which will be free of certain trace metals generally found in polymers produced with Ziegler-Natta type catalysts such as aluminum, magnesium and chloride. The polymer products produced with the catalysts of this invention should, then, have a broader range of applications than polymers produced with more conventional Ziegler-Natta type catalysts comprising a metal alkyl, such as an aluminum alkyl.

In a preferred embodiment of the present invention, a bis(cyclopentadienyl)metal compound (said metal being selected from the Group consisting of titanium, zirconium and hafnium, said compound containing two, independently, substituted or unsubstituted cyclopentadienyl radicals and one or two lower alkyl substituents and/or one or two hydride substituents) will be combined with a trisubstituted ammonium salt of a substituted tetra(aromatic)boron. Each of the trisubstitutions in the ammonium cation will be the same or a different lower alkyl or aryl radical. By lower alkyl is meant an alkyl radical containing from one to four carbon atoms.

The two components will be combined at a temperature within the range from 0°C to 100°C. The components will be combined, preferably, in an aromatic hydrocarbon solvent, most preferably toluene. Nominal holding times within the range from 10 seconds to 60 minutes will be sufficient to produce the catalyst of this invention.

In a preferred embodiment, the catalyst, immediately after formation, will then be used to polymerize a lower α-olefin particularly ethylene or propylene, most preferably ethylene, at a temperature within the range from 0°C to 100°C and at a pressure within the range 1.03 to 34.45 bar (from 15 to 500 psig). The monomers will be maintained at polymerization conditions for a nominal holding time within the range from 1 to 60 minutes and the catalyst will be used at a concentration within the range from $10^{-5}$ to $10^{-1}$ moles per liter of solvent.

Having thus broadly described the present invention and a preferred and most preferred embodiment thereof, it is believed that the same will become even more apparent by reference to the following examples. It will be appreciated, however, that the examples are presented solely for purposes of illustration and should not be construed as limiting the invention. All of the examples were completed either under an argon blanket by standard Schlenk techniques or under a helium blanket in a Vacuum Atmospheres HE43-2 drybox. The solvents used in the experiments were rigorously dried under nitrogen by standard techniques. The boron and metallocene reagents used in the examples were either purchased or prepared following published techniques.

EXAMPLE 1

In this example, an active isolable olefin polymerization catalyst was produced by first suspending 0.56 g of tri(n-butyl)ammonium tetra(o-tolyl)boron in 50 ml of toluene and then adding 0.25 g of bis(cyclopentadienyl)zirconium dimethyl. The mixture was stirred at room temperature for 1 hour. After 1 hour an insoluble yellow precipitate separated from an orange solution. The yellow precipitate was isolated by filtration, washed three times with 20 ml of pentane and dried in-vacuo. 0.26 g of the yellow precipitate were recovered.

EXAMPLE 2

In this example, excess ethylene was added at atmospheric pressure to a portion of the orange mother liquor from Example 1 in a 100 ml side armed flask and polyethylene formed. Ethylene was also contacted with a portion of the yellow precipitate, which precipitate was suspended in toluene in a 50 ml side armed flask and again polyethylene was formed.

EXAMPLE 3

In this example, an active, isolable olefin polymerization catalyst was prepared by first suspending 0.78 g of tri(n-butyl)ammonium tetra(m,m-dimethylphenyl)boron in 50 ml of toluene and then adding 0.50 g of bis(pentamethylcyclopentadienyl)zirconium dimethyl. The mixture was stirred at room temperature for 1 hour. After 1 hour, the reaction mixture was evaporated to dryness. The resulting crude red-brown solid was washed with 30 ml of pentane and dried in-vacuo to yield 0.56 g of a toluene soluble brown solid. Both the brown solid and the crude reaction mixture were dissolved in 40 ml of toluene in a 100 ml side armed flask and were observed to polymerize ethylene at atmospheric pressure.

EXAMPLE 4

In this example, two active, isolable olefin polymerization catalysts were prepared by first dissolving 0.78 g of tri (n-butyl)ammonium tetra(o,p-dimethylphenyl)boron in 30 ml of toluene and 15 ml of pentane. The solution was then cooled to -30°C and 0.50 g of bis(pentamethylcyclopentadienyl)zirconium dimethyl were added. The mixture was warmed to room temperature with agitation and held for 4 hours. A yellow precipitate was separated from a purple reaction mixture by filtration. The yellow precipitate was dried in-vacuo to give 0.62 g of product. After separation of the yellow precipitate, the purple mother liquor was evaporated to dryness to give 0.32 g of a purple glassy solid. The yellow and purple products polymerized ethylene in deuterotoluene in NMR tubes.

EXAMPLE 5

In this example, an active olefin polymerization catalyst was prepared by first suspending 0.87 g of tri(n-butyl)ammonium tetra(p-tolyl)boron in 50 ml of toluene and then adding 0.50 g of (pentamethylcyclopentadienyl)(cyclopentadienyl)zirconium dimethyl. The reaction was stirred at room temperature for 1B hours to give a blue-green homogenous solution. The reaction mixture was dried in-vacuo, washed with 30 ml of pentane, and then redissolved in 100 ml of toluene. The resulting blue-green solution was filtered into a glass pressure vessel and stirred under 1.5 atmospheres of ethylene. An immediate exotherm and polymer formation was observed upon exposure of ethylene. The yield of polyethylene was 4.5 g after 15 minutes.

EXAMPLE 6

In this example, an olefin polymerization catalyst was prepared by first suspending 0.1 g of tri(n-butyl)ammonium tetra(p-ethylphenyl)boron in 5 ml of $d_6$-benzene and then adding 0.05 g of (pentamethylcyclopentadienyl)(cyclopentadienyl)zirconium dimethyl. The reaction was complete after 30 minutes. The green solution was then dried in-vacuo to give a green glassy solid. The crude green product was extracted with 20 ml of toluene. In separate experiments, the toluene extract was exposed to ethylene, to propylene and to a mixture of ethylene and propylene. In each case significant polymerization activity was observed.

**Claims**

1. An ionic catalyst for polymerising olefins, diolefins, and/or acetylenically unsaturated monomers comprising an organometallic compound of the general formula:

$$[ (A\text{-}Cp)\, MX_1 ]^+ [BAr_1Ar_2X_3X_4]^- \qquad \text{or} \qquad [ (A\text{-}Cp)\, MX_1L' ]^+ [BAr_1Ar_2X_3X_4]^-$$

wherein M is titanium, zirconium or hafnium;
(A-Cp) is either (Cp)(Cp*) or Cp-A'-Cp* and Cp and Cp* are the same or different substituted or unsubstituted cyclopentadienyl radicals;
A' is a covalent bridging group;
$X_1$ is selected from hydride radicals, hydrocarbyl radicals, subtituted-hydrocarbyl radicals or organometalloid radicals;
L' is a neutral Lewis base;
$[BAr_1Ar_2X_3X_4]$ being a compatible, bulky, non-coordinating anion comprising an aryl group and being a single coordination complex having a plurality of lipophilic radicals covalently coordinated to and shielding a central, formal charge bearing boron atom and sufficiently labile to be displaced by a neutral Lewis base, wherein:

B is boron in a valence state of 3;

$Ar_1$, $Ar_2$, $X_3$ and $X_4$ are selected from hydrocarbyl substituted aromatic hydrocarbon radicals containing up to 20 carbon atoms;

the anion being selected so as to avoid transfer of a fragment of the anion to the metal cation by steric hindrance resulting from substitutions on the aromatic carbons of the anion.

2. A method for preparing a catalyst according to claim 1 comprising reacting a bis(cyclopentadienyl) compound with an ion exchange compound so as to combine at least one ligand of the bis(cyclopentadienyl) compound with the ion exchange compound or at least a portion thereof, thereby generating the ionic catalyst.

3. Method for polymerising an $\alpha$-olefin, diolefin and/or acetylenically unsaturated monomer either alone or in combination using a catalyst according to claim 1, which method comprises the steps of (a) contacting monomer and the catalyst prepared previously or *in situ* during polymerisation, (b) continuing the contacting of step (a) for a sufficient time to polymerise at least a portion of the monomer; and (c) recovering a polymer product.

4. A method according to claim 3, wherein the monomer is a prochiral olefin, the catalyst is prepared by the method of claim 2 in which the bis(cyclopentadienyl) metal compound (i) is a pure enantiomer or a racemic mixture of two enantiomers of a rigid, chiral metallocene; or (ii) contains a covalent bridging group beween two substituted cyclopentadienyl radicals, and the polymer product is an isotactic polymer.

**Patentansprüche**

1. Ionischer Katalysator zum Polymerisieren von Olefinen, Diolefinen und/oder acetylenisch ungesättigten Monomeren, der organometallische Verbindung mit der allgemeinen Formel

$$[(A\text{-}Cp)MX_1]^+[BAr_1Ar_2X_3X_4]^- \qquad oder \qquad [(A\text{-}Cp)\ MX_1L']\ +\ [BAr_1Ar_2X_3X_4]^-$$

umfasst, wobei M Titan, Zirkonium oder Hafnium ist;
(A-Cp) entweder (Cp)(Cp\*) oder Cp-A'-Cp\* ist, und Cp und Cp\* die gleichen oder verschiedene, substituierte oder unsubstituierte Cyclopentadienylreste sind;
A' eine kovalente Brückengruppe ist;
$X_1$ ausgewählt ist aus Hydridresten, Kohlenwasserstoffresten, substituierten Kohlenwasserstoffresten oder Organometalloidresten;
L' eine neutrale Lewisbase ist;
$[BAr_1Ar_2X_3X_4]$ ein kompatibles, raumerfüllendes, nicht-koordinierendes Anion ist, das eine Arylgruppe umfasst und ein einzelner Koordinationskomplex mit einer Vielzahl lipophiler Reste ist, die kovalent an ein zentrales, Formalladung tragendes Boratom koordiniert sind und dies abschirmen und ausreichend labil sind, um durch eine neutrale Lewisbase verdrängt zu werden, wobei:

B Bor im Wertigkeitszustand 3 ist;
$Ar_1$, $Ar_2$, $X_3$ und $X_4$ ausgewählt sind aus kohlenwasserstoffsubstituierten aromatischen Kohlenwasserstoffresten, die bis zu 20 Kohlenstoffatome enthalten;

wobei das Anion so gewählt wird, dass Übertragung eines Fragments des Anions auf das Metallkation vermieden wird durch sterische Hinderung, die aus Substitutionen an den aromatischen Kohlenstoffatomen des Anions resultiert.

2. Verfahren zum Herstellen von Katalysator gemäß Anspruch 1, bei dem eine Bis(cyclopentadienyl)verbindung mit einer Ionenaustauschverbindung umgesetzt wird, um mindestens einen Liganden der Bis(cyclopentadienyl)verbindung mit der Ionenaustauschverbindung oder mindestens einem Teil davon zu kombinieren, wodurch der ionische Katalysator erzeugt wird.

3. Verfahren zum Polymerisieren von $\alpha$-Olefin, Diolefin und/oder acetylenisch ungesättigtem Monomer entweder allein oder in Kombination unter Verwendung von Katalysator gemäß Anspruch 1, bei dem in Stufen (a) Monomer und der zuvor oder in situ während der Polymerisation hergestellte Katalysator kontaktiert werden, (b) das Kontaktieren von Stufe (a) für eine ausreichende Zeit fortgesetzt wird, um mindestens einen Teil des Monomers zu polymerisieren, und (c) Polymerprodukt gewonnen wird.

4. Verfahren nach Anspruch 3, bei dem das Monomer prochirales Olefin ist, der Katalysator nach dem Verfahren von Anspruch 2 hergestellt wird, bei dem die Bis(cyclopentadienyl)metallverbindung (i) ein reines Enantiomer oder eine racemische Mischung von zwei Enantiomeren eines starren, chiralen Metallocens ist; oder (ii) eine kovalente Brückengruppe zwischen zwei substituierten Cyclopentadienylresten enthält, und das Polymerprodukt ein isotaktisches Polymer ist.

**Revendications**

1. Catalyseur ionique pour la polymérisation d'oléfines, de dioléfines et/ou de monomères à insaturation acétylénique, comprenant un composé organométallique de formule générale :

$$[ (A\text{-}Cp) MX_1 ]^+ [ BAr_1Ar_2X_3X_4 ]^- \qquad \text{ou} \qquad [ (A\text{-}Cp) MX_1L' ]^+ [ BAr_1Ar_2X_3X_4 ]^-$$

dans laquelle M représente le titane, le zirconium ou l'hafnium ;
(A-Cp) représente un groupe (Cp) (Cp*) ou Cp-A'-Cp* et Cp et Cp* représentent des radicaux cyclopentadiényle identiques ou différents, substitués ou non substitués ;
A' représente un groupe de pontage covalent ;
$X_1$ est choisi entre des radicaux hydrure, des radicaux hydrocarbyle, des radicaux hydrocarbyle substitués et des radicaux organométalloïdiques ;
L' représente une base de Lewis neutre ;
$[BAr_1Ar_2X_3X_4]$ représentant un anion non coordinant compatible volumineux comprenant un groupe aryle et consistant en un complexe de coordination unique comportant une pluralité de radicaux lipophiles en coordination covalente avec, et faisant écran à, un atome de bore central porteur de charge formelle et suffisamment labile pour être déplacé par une base de Lewis neutre, où :

B représente le bore à l'état de valence 3 ;
$Ar_1$, $Ar_2$, $X_3$ et $X_4$ sont choisis parmi des radicaux hydrocarbonés aromatiques à substituants hydrocarbyle, contenant jusqu'à 20 atomes de carbone ;
l'anion étant choisi de manière à éviter le transfert d'un fragment de l'anion au cation métallique par encombrement stérique résultant de substitutions sur les atomes de carbone aromatiques de l'anion.

2. Procédé pour la préparation d'un catalyseur suivant la revendication 1, comprenant la réaction d'un composé bis (cyclopentadiénylique) avec un composé échangeur d'ions de manière à combiner au moins un ligand du composé bis(cyclopentadiénylique) avec le composé échangeur d'ions ou au moins une de ses parties, en engendrant ainsi le catalyseur ionique.

3. Procédé pour la polymérisation d'une $\alpha$-oléfine, d'une dioléfine et/ou d'un monomère à insaturation acétylénique seul ou en association en utilisant un catalyseur suivant la revendication 1, procédé qui comprend les étapes consistant (a) à mettre en contact un monomère et le catalyseur préparé précédemment ou *in situ* au cours de la polymérisation, (b) à continuer la mise en contact de l'étape (a) pendant un temps suffisant pour polymériser au moins une partie du monomère, et (c) à recueillir un produit polymère.

4. Procédé suivant la. revendication 3, dans lequel le monomère est une oléfine prochirale, le catalyseur est préparé par le procédé de la revendication 2 dans lequel le composé métallique bis(cyclopentadiénylique) (i) est un énantiomère pur ou un mélange racémique de deux énantiomères d'un métallocène chiral rigide ; ou (ii) contient un groupe de pontage covalent entre deux radicaux cyclopentadiényle substitués, et le produit polymère est un po-lymère isotactique.